# EUROPEAN PATENT SPECIFICATION

(11) **EP 0 540 639 B1**
(45) Date of publication and mention of the grant of the patent: **13.09.1995**
(21) Application number: 91914075.6
(22) Date of filing: 15.07.1991
(51) Int. Cl.: C09D 5/03, C09D 175/06

(54) **POWDER COATING COMPOSITIONS**
PULVER-BESCHICHTUNGSMASSE
COMPOSITION DE POUDRE POUR REVETEMENT

(30) Priority: 20.07.1990 US 555290
(43) Date of publication of application: 12.05.1993
(73) Proprietor: EASTMAN CHEMICAL COMPANY, Kingsport, TN 37660 (US)
(72) Inventor: LIGHT, Fred, Winifred, Jr., c/o Eastman Kodak Co., New York 14650-2201 (US); Chang, Yeong-Ho, c/o Eastman Kodak Co., New York 14650-2201 (US)
(74) Representative: Behrens, Dieter, Dr.-Ing.
(86) International application number: US9104958
(87) International publication number: WO9201756

(56) References cited:
- US-A- 3 993 849
- US-A- 4 150 211
- US-A- 4 413 079
- US-A- 4 824 909
- US-A- 4 859 760

## Description

This invention pertains to certain novel, thermosetting powder coating compositions which produce low-gloss (matte) coatings on various substrates. More particularly, this invention pertains to powder coating compositions comprising a novel combination of (1) one or more semi-crystalline, hydroxyl polyesters, (2) one or more amorphous polyesters and (3) one or more hydroxyl acrylic polymers.

Thermosetting powder coating compositions are used extensively to produce durable protective coatings on various materials. Thermosetting coatings, when compared to coatings derived from thermoplastic compositions, generally are tougher, more resistant to solvents and detergents, have better adhesion to metal substrates, and do not soften when exposed to elevated temperatures. Thermosetting powder coating compositions possess certain significant advantages over solvent-based coating compositions which are inherently undesirable because of the environmental and safety problems occasioned by the evaporation of the solvent system. Solvent-based coating compositions also suffer from the disadvantage of relatively poor percent utilization, i.e., in some modes of application, only 60 percent or less of the solvent-based coating composition being applied contacts the article or substrate being coated. Thus, a substantial portion of solvent-based coatings can be wasted since that portion which does not contact the article or substrate being coated obviously cannot be reclaimed.

Coatings derived from thermosetting coating compositions should exhibit or possess good impact strength, hardness, flexibility, and resistance to solvents and chemicals. It is essential that powder coating compositions remain in a free-flowing, finely divided state for a reasonable period after they are manufactured and packaged. Thus, polyesters utilized in powder coating formulations desirably possess a glass transition temperature (Tg) higher than the storage temperatures to which the formulations will be exposed. Semi-crystalline polyesters and blends thereof with amorphous polyesters also may be utilized in powder coating formulations. For this application, semi-crystalline polyesters desirably possess a significant degree of crystallinity to prevent caking or sintering of the powder for a reasonable period of time prior to its application to a substrate. Semi-crystalline polyesters used in powder coating formulations also must have melting temperature low enough to permit the compounding of the powder coating formulation without causing the cross-linking agent to react prematurely with the polyesters. The lower melting temperature of the semi-crystalline polyester also is important to achieving good flow of the coating prior to curing and thus aids the production of smooth and glossy coatings.

Finally, the production of tough coatings which are resistant to solvents and chemicals requires adequate cross-linking of the powder coating compositions at curing temperatures and times commonly employed in the industry. In the curing of powder coating compositions, a coated article typically is heated at a temperature in the range of about 325 to 400°F (163-204°C) for up to about 20 minutes causing the coating particles to melt and flow followed by reaction of the cross-linking (curing) agent with the polyester. The degree of curing may be determined by the methyl ethyl ketone rub test described hereinbelow. Normally, a thermosetting coating is considered to be completely or adequately cross-linked if the coating is capable of sustaining 200 double rubs. It is apparent that the use of lower temperatures and/or shorter curing times to produce adequately cross-linked coatings is very advantageous since higher production rates and/or lower energy costs can be achieved thereby.

For certain end uses such as office furniture, automotive exterior trim and automotive after market parts, a coating having low gloss is desired. Known methods for preparing powder coating compositions which produce low-gloss coatings include blending two or more finished powder coating compositions or by blending fillers or extenders with a coating composition. These methods are time consuming and/or can result in powder coating compositions which produce coatings deficient in one or more of the properties refereed to hereinabove.

We have discovered that coatings having low gloss and good to excellent hardness, impact strength (toughness), flexibility, and resistance to solvents and chemicals may be obtained by the use of powder coating compositions comprising a combination of a semicrystalline polyester, an amorphous polyester, a hydroxyl acrylic polymer and a blocked polyisocyanate compound. The coating compositions are especially distinguished from known compositions by their unique combination of excellent hardness and flexibility in addition to low gloss.

The powder coating compositions provided by this invention thus comprise an intimate blend, typically in a finely divided form, of:
(1) 50 to 90 weight percent, based on the weight of (1) and (2), of a hydroxyl polyester component comprised of:
   (A) 50 to 90 weight percent, based on the weight of the hydroxyl polyester component, of a semi-crystalline polyester having a glass transition temperature (Tg) of less than 50°C, a hydroxyl number of 20 to 100, an inherent viscosity of 0.1 to 0.5, a melting range of 70 to 150°C, a number average molecular weight of 1500 to 10,000, and a heat of fusion (second heating cycle of DSC) of greater than 5 cal/g-°C, e.g. 5 to 20 cal/g-°C; wherein said polyester is comprised of (1) a diacid component comprised of at least 50, preferably at least 90 mole percent terephthalic or 1,4-cyclohexanedicarboxylic acid residues and (2) diol residues comprised of 0 to 20 mole percent 2,2-dimethyl-1,3-propanediol residues and 80 to 100 mole percent of residues of one or more diols having the formula ―O―(CH₂)ₙ―O― wherein n is 4 to 12; and
   (B) 10 to 50 weight percent, based on the weight of the hydroxyl polyester component, of an amorphous polyester having a glass transition temperature of greater than 40°C, a hydroxyl number of 20 to 120 and an inherent viscosity of 0.1 to 0.5;
(2) 10 to 50 weight percent, based on the weight of (1) and (2), of a hydroxyl acrylic polymer having a glass transition temperature (Tg) of greater than 40°C and a hydroxyl number of 20 to 100; and
(3) a cross-linking effective amount of a blocked polyisocyanate compound.
The powder coating compositions encompassed by our invention are further characterized by producing coatings, e.g. from 1 to 4 mils thick, on metals which exhibit an ASTM D-523-85 60° gloss value of not greater than 35, ASTM D2794-84 front/back impact strength values of at least 40/20 inch-pounds, an ASTM D-3359-83 cross-hatch adhesion pass percent value of at least 90, a pencil hardness of at least H and an ASTM 4145-83 flexibility of 2T or better.

Examples of the semi-crystalline polyesters which may be used in the manufacture of the powder coating compositions are set forth in U.S. Patent 4,859,760. The semi-crystalline polyester preferably is comprised of (1) diacid residues comprised of (a) 80 to 98 mole percent terephthalic acid residues and (b) 2 to 20 mole percent of 1,4-cyclohexanedicarboxylic acid residues, 1,3-cyclohexanedicarboxylic acid residues, adipic acid residues or a mixture thereof, and (2) diol residues comprised of at least 50 mole percent of residues having the formula ―O―(CH₂)ₙ―O― wherein n is 4 to 12.

The semi-crystalline polyester component, in addition to the residues specified hereinabove, may contain minor amounts, e.g., up to 10 mole percent based upon the total monomer residues of the polyester, of other diacid and diol residues such as the residues of ethylene glycol, propylene glycol, 1,3-propanediol, 2,4-dimethyl-2-ethylhexane-1,3-diol, 2-ethyl-2-butyl-1,3-propanediol, 2-ethyl-2-isobutyl-1,3-propanediol, 1,3-butanediol, thiodiethanol, 1,2-, 1,3- and 1,4-cyclohexanedimethanol, 2,2,4,4-tetramethyl-1,3-cyclobutanediol, 1,4-xylylenediol and residues of succinic, glutaric, adipic, azelaic, sebacic, fumaric, maleic, itaconic, phthalic and/or isophthalic acids. The 1,3- and 1,4-cyclohexane-dicarboxylic acid or the dialkyl esters thereof used in the preparation of the polyesters may be the trans isomer, the cis isomer, or a mixture of such isomers. Preferably, the cis:trans ratio is in the range of 30:70 to 70:30.

The semi-crystalline polyester preferably has a Tg of less than 30°C, e.g., 0 to 30°C, a hydroxyl number of 30 to 80, an inherent viscosity of 0.1 to 0.5, a melting range of 90 to 140°C, and a number average molecular weight of 2000 to 6000. The heat of fusion (second heating cycle of DSC) of the preferred semi-crystalline polyesters is greater than 8 cal/g-°C, e.g., from 8 to 15 cal/g-°C. Semi-crystalline polyesters are those that exhibit an endothermic transition on a differential scanning calorimetry (DSC) scan from low to high temperature. Such a transition also is referred to as melting, a destruction of the orderly arranged molecular structure. The preferred semi-crystalline polyesters comprise (1) diacid residues consisting essentially of 85 to 95 mole percent terephthalic acid residues and 5 to 15 mole percent 1,3-cyclohexanedicarboxylic or 1,4-cyclohexanedicarboxylic acid residues, preferably having a trans isomer content of 35 to 65 mole percent and (2) diol residues consisting essentially of residues having the formula -O-(CH₂)ₙ-O- wherein n is 6 to 12, especially 1,6-hexanediol.

The amorphous polyesters present in the compositions provided by this invention have a Tg of 50°C or greater, e.g., from 55 to 80°C, a hydroxyl number in the range of 25 to 120, an acid number of not more than 15 and an inherent viscosity of 0.15 to 0.4. As used herein, the term "amorphous" refers to a polyester which exhibits no, or only a trace of, crystallization or melting point as determined by differential scanning calorimetry (DSC). The amorphous polyester component preferably is comprised of (1) diacid residues of which at least 50 mole percent are terephthalic acid residues, (2) glycol residues of which at least 50 mole percent are derived from 2,2-dimethyl-1,3-propanediol (neopentyl glycol) and (3) up to 10 mole percent, based on the total moles of (1), (2) and (3), of trimethylolpropane residues. These preferred amorphous polyesters are commercially available, e.g., under the names RUCOTE 107, Cargill Resins 3000 and 3002, UCB E3145, Hoechst AN745, Scado Urolac 2115 and Urolac 2504, and/or can be prepared according to the procedures described in U.S. Patents 3,296,211, 3,842,021, 4,124,570, 4,264,751, and 4,413,079 and Published Japanese Patent Applications (Kokai) 73-05,895, and 73-26,292. The preferred amorphous polyesters consist essentially of terephthalic acid residues, 2,2-dimethyl-1,3-propanediol residues and up to 10 mole percent, based on the total moles of trimethylolpropane and 2,2-dimethyl-1,3-propanediol residues, of trimethylolpropane residues, and having a Tg of 50 to 65, a hydroxyl number of 35 to 120, an acid number of less than 10 and an inherent viscosity of 0.1 to 0.25.

The hydroxyl acrylic polymers useful in the preparation of our novel compositions have a glass transition temperature (Tg) of greater than 40°C and a hydroxyl number of 20 to 100. Examples of suitable hydroxyl acrylic polymers are sold under the names SCJ-800B, SCJ-802 and Joncryl 587 by S. C. Johnson. These acrylic polymers may be prepared by known solution polymerization processes.

The hydroxyl acrylic polymer utilized in the powder coating composition of this invention typically contains 80-95 weight percent methyl methacrylate or styrene or a mixture of methyl methacrylate, styrene, and 5-20 weight percent of a hydroxyalkyl methacrylate or a hydroxyalkyl acrylate each having 2-4 carbon atoms in the alkyl groups or mixtures thereof. Optionally, up to 10 weight percent of an alkyl methacrylate or an alkyl acrylate having 2-14 carbon atoms in the alkyl groups and may be present in the acrylic polymer to provide a polymer having a glass transition temperature within the range specified above. A minor amount of acrylic acid also may be present to enhance the adhesion of the hydroxyl acrylic polymer.

Examples of such hydroxyl acrylic polymers include polymers composed of 82-94 weight percent methyl methacrylate, 1-10 weight percent of the alkyl acrylate or methacrylate, 5-17% by weight of the hydroxy alkyl acrylate or methacrylate, e.g., an acrylic polymer consisting of methyl methacrylate, lauryl methacrylate, hydroxyethyl acrylate, or hydroxypropyl methacrylate or consisting of methyl methacrylate and hydroxy propyl methacrylate.

Typical alkyl acrylates and alkyl methacrylates having 2-14 carbon atoms in the alkyl groups that can be used to prepare the acrylic polymer are as follows: ethyl acrylate, propyl acrylate, butyl acrylate, hexyl acrylate, 2-ethylhexyl acrylate, nonyl acrylate, decyl acrylate, lauryl acrylate, tetradecyl acrylate, ethyl methacrylate, propyl methacrylate, butyl methacrylate, isobutyl methacrylate, hexyl methacrylate, 2-ethylhexyl methacrylate, nonyl methacrylate, decyl methacrylate, lauryl methacrylate, tetradecyl methacrylate and the like.

Typical hydroxyalkyl acrylates and methacrylates which can be used to prepare the acrylic polymer are 2-hydroxyethyl acrylate, hydroxypropyl acrylate, hydroxybutyl acrylate, 2-hydroxyethyl methacrylate, hydroxypropyl methacrylate, hydroxybutyl methacrylate, and the like. Hydroxyethyl acrylate and hydroxypropyl methacrylate are preferred. Hydroxypropyl methacrylate is a mixture of 2-hydroxypropyl methacrylate and 1-methyl-2-hydroxyethyl methacrylate. One particularly useful mixture is of 68-75% of 2-hydroxy propyl methacrylate and 1-methyl-2-hydroxyethyl methacrylate.

The blocked polyisocyanate cross-linking component of the powder coating compositions of this invention are known compounds and can be obtained from commercial sources or may be prepared according to published procedures. Upon being heated to cure coatings of the compositions, the compounds are unblocked and the isocyanate groups react with hydroxy groups present on the semi-crystalline and amorphous polyesters and the acrylic polymer to cross-link the polymer chains and thus cure the compositions to form tough coatings. Examples of the blocked polyisocyanate cross-linking component include those which are based on isophorone diisocyanate blocked with ε-caprolactam, commercially available as Hüls B1530, Ruco NI-2 and Cargill 2400, or toluene 2,4-diisocyanate blocked with ε-caprolactam, commercially available as Cargill 2450, and phenol-blocked hexamethylene diisocyanate.

The most readily-available, and thus the preferred, blocked polyisocyanate cross-linking agents or compounds are those commonly referred to as ε-caprolactam-blocked isophorone diisocyanate, e.g., those described in U.S. Patents 3,822,240, 4,150,211 and 4,212,962. However, the products marketed as ε-caprolactam-blocked isophorone diisocyanate may consist primarily of the blocked, difunctional, monomeric isophorone diisocyanate, i.e., a mixture of the cis and trans isomers of 3-isocyanatomethyl-3,5,5-trimethylcyclohexylisocyanate, the blocked, difunctional dimer thereof, the blocked, trifunctional trimer thereof or a mixture of the monomeric, dimeric and/or trimeric forms. For example, the blocked polyisocyanate compound used as the cross-linking agent may be a mixture consisting primarily of the ε-caprolactam-blocked, difunctional, monomeric isophorone diisocyanate and the ε-caprolactam-blocked, trifunctional trimer of isophorone diisocyanate. The description herein of the cross-linking agents as "polyisocyanates" refers to compounds which contain at least two isocyanato groups which are blocked with, i.e., reacted with, another compound, e.g., ε-caprolactam. The reaction of the isocyanato groups with the blocking compound is reversible at elevated temperatures, e.g., about 150°C and above, at which temperature the isocyanato groups are available to react with the hydroxyl groups present on the semi-crystalline polyester and acrylic polymer to form urethane linkages.

Another class of blocked polyisocyanate compounds which may be employed as the cross-linking agent of the powder coating compositions are adducts of the 1,3-diazetidine-2,4-dione dimer of isophorone diisocyanate and a diol, wherein the adducts have the structure 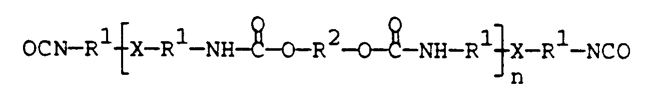
wherein
R¹ is a divalent 1-methylene-1,3,3-trimethyl-5-cyclohexyl radical, i.e., a radical having the structure 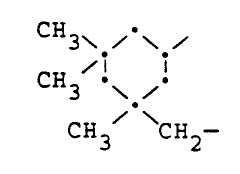
R² is a divalent aliphatic, cycloaliphatic, araliphatic or aromatic residue of a diol; and
X is a 1,3-diazetidine-2,4-dionediyl radical, i.e., a radical having the structure 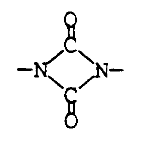
wherein the ratio of NCO to OH groups in the formation of the adduct is 1:0.5 to 1:0.9, the mole ratio of diazetidinedione to diol is from 2:1 to 6:5, the content of free isocyanate groups in the adduct is not greater than 8 weight percent and the adduct has a molecular weight of 500 to 4000 and a melting point of 70 to 130°C.

The above-described adducts may be prepared according to the procedures described in U.S. Patent 4,413,079 by reacting the diazetidine dimer of isophorone diisocyanate, preferably free of isocyanurate trimers of isophorone diisocyanate, with diols in a ratio of reactants which gives as isocyanto:hydroxyl ratio of 1:0.5 to 1:0.9, preferably 1:0.6 to 1:0.8. The adduct preferably has a molecular weight of 1450 to 2800 and a melting point of 85 to 120°C. The preferred diol reactant is 1,4-butanediol. Such an adduct is commercially available under the name Hüls BF1540.

The amount of the blocked polyisocyanate cross-linking compound present in the compositions of our invention can be varied depending on several factors such as the properties and characteristics of the particular semi-crystalline polyester and/or hydroxyl acrylic polymer employed, the particular cross-linking agent used, the degree of pigment loading, the properties required of the coatings to be prepared from the compositions, etc. Typically, the amount of cross-linking compound which will effectively cross-link the hydroxy-containing polymers to produce coatings having a good combination of properties is in the range of 5 to 30 weight percent, preferably 15 to 25 weight percent, based on the total weight of the semi-crystalline polyester, the acrylic polymer and the cross-linking compound.

The powder coating compositions of our invention may be prepared from the compositions described herein by dry-mixing and then melt-blending the semi-crystalline polyester, the amorphous polyester, the hydroxyl acrylic polymer and the blocked polyisocyanate compound, along with other additives commonly used in powder coatings, and then grinding the solidified blend to a particle size, e.g., an average particle size in the range of 10 to 300 microns, suitable for producing powder coatings. For example, the ingredients of the powder coating composition may be dry blended and then melt blended in a Brabender extruder at 90 to 130°C, granulated and finally ground. The melt blending should be carried out at a temperature sufficiently low to prevent the unblocking of the polyisocyanate cross-linking compound and thus avoid premature cross-linking. To minimize the exposure of the blocked polyisocyanate to elevated temperatures, the semi-crystalline polyesters and acrylic polymers may be blended prior to the incorporation therein of the blocked polyisocyanate compound.

Typical of the additives which may be present in the powder coating compositions include benzoin, used to reduce entrapped air or volatiles, flow aids or flow control agents which aid the formation of a smooth surface, catalysts to promote the cross-linking reaction between the isocyanate groups of the cross-linking agent and the hydroxyl groups on the polymers, stabilizers, pigments and dyes. Although it is possible to cure or cross-link the composition without the use of a catalyst, it is usually desirable to employ a catalyst to aid the cross-linking reaction, e.g., in an amount of about 0.05 to 2.0 weight percent cross-linking catalyst based on the total weight of the semi-crystalline hydroxyl polyester, the hydroxyl acrylic polymer and the cross-linking agent. Suitable catalysts for promoting the cross-linking include organo-tin compounds such as dibutyltin dilaurate, dibutyltin dimaleate, dibutyltin oxide, stannous octanoate, 1,3-diacetoxy-1,1,3,3-tetrabutyldistanoxane and similar compounds.

The powder coating compositions preferably contain a flow aid, also referred to as flow control or leveling agents, to enhance the surface appearance of cured coatings of the powder coating compositions. Such flow aids typically comprise acrylic polymers and are available from several suppliers, e.g., Modaflow from Monsanto Company and Acronal from BASF. Other flow control agents which may be used include Modarez MFP available from Synthron, EX 486 available from Troy Chemical, BYK 360P available from BYK Mallinkrodt and Perenol F-30-P available from Henkel. A specific flow aid is an acrylic polymer having a molecular weight of about 17,000 and containing 60 mole percent 2-ethylhexyl methacrylate residues and about 40 mole percent ethyl acrylate residues. The amount of flow aid present may be in the range of 0.5 to 4.0 weight percent, based on the total weight of the semi-crystalline polyester, the amorphous polyester, the acrylic polymer and the cross-linking agent.

The powder coating compositions may be deposited on various metallic and non-metallic substrates by known techniques for powder deposition such as by means of a powder gun, by electrostatic deposition or by deposition from a fluidized bed. In fluidized bed sintering, a preheated article is immersed into a suspension of the powder coating in air. The particle size of the powder coating composition normally is in the range of 60 to 300 microns. The powder is maintained in suspension by passing air through a porous bottom of the fluidized bed chamber. The articles to be coated are preheated to 250 to 400°F (about 121 to 205°C) and then brought into contact with the fluidized bed of the powder coating composition. The contact time depends on the thickness of the coating that is to be produced and typically is from 1 to 12 seconds. The temperature of the substrate being coated causes the powder to flow and thus fuse together to form a smooth, uniform, continuous, uncratered coating. The temperature of the preheated article also affects cross-linking of the coating composition and results in the formation of a tough coating having a good combination of properties. Coatings having a thickness between 200 and 500 microns may be produced by this method.

The compositions also may be applied using an electrostatic process wherein a powder coating composition having a particle size of less than 100 microns, preferably 15 to 50 microns, is blown by means of compressed air into an applicator in which it is charged with a voltage of 30 to 100 kV by high-voltage direct current. The charged particles then are sprayed onto the grounded article to be coated to which the particles adhere due to the electrical charge thereof. The coated article is heated to melt and cure the powder particles. Coating of 40 to 120 microns thickness may be obtained.

Another method of applying the powder coating compositions is the electrostatic fluidized bed process which is a combination of the two methods described above. For example, annular or partially annular electrodes are mounted over a fluidized bed so as to produce an electrostatic charge such as 50 to 100 kV. The article to be coated, either heated, e.g., 250 to 400°F, or cold, is exposed briefly to the fluidized powder. The coated article then can be heated to effect cross-linking if the article was not preheated to a temperature sufficiently high to cure the coating upon contact of the coating particles with the article.

The powder coating compositions of this invention may be used to coat articles of various shapes and sizes constructed of heat-resistant materials such as glass, ceramic and various metal materials. The compositions are especially useful for producing coatings on articles constructed of metals and metal alloys, particularly steel articles.

The compositions and coatings of our invention are further illustrated by the following examples. The inherent viscosities (I.V.; dl/g) referred to herein were measured at 25°C using 0.5 g polymer per 100 mL of a solvent consisting of 60 parts by weight phenol and 40 parts by weight tetrachloroethane. Melt viscosities (poise) were determined using an ICI melt viscometer according to ASTM D4287-83. Acid and hydroxyl numbers were determined by titration and are reported herein as mg of KOH consumed for each gram of polymer. The glass transition temperatures (Tg) and the melting temperatures (Tm) were determined by differential scanning calorimetry (DSC) on the second heating cycle at a scanning rate of 20°C per minute after the sample was heated to melt and quenched to below the Tg of the polymer. Tg values are reported as the midpoint of the transition and Tm at peaks of transitions. The weight average molecular weight (Mw) and number average molecular weight (Mn) were determined by gel permeation chromatography in tetrahydrofuran (THF) using a polystyrene standard and a UV detector.

Coatings were prepared on 3 inch by 9 inch panels of 24-gauge, polished, cold roll steel, the surface of which has been zinc phosphated (Bonderite 37, The Parker Company). Impact strengths were determined using an impact tester (Gardner Laboratory, Inc.) according to ASTM D2794-84. A weight with a 5/8-inch diameter, hemispherical nose was dropped within a slide tube from a specified height to drive into the front (coated face) or back of the panel. The highest impact which did not crack the coating was recorded in inch-pounds, front and reverse. The 20° and 60° gloss values were measured using a glossmeter according to ASTM D-523-85. The adhesion values (% pass) were determined according to ASTM D-3359-83.

The pencil hardness of the coatings was determined according to ASTM 3363-74 (reapproved 1980) and is reported as the hardest lead which does not cut into the coating. The results of the pencil hardness test are expressed according to the following scale: (softest) 6B, 5B, 4B, 3B, 2B, B, HB, F, H, 2H, 3H, 4H, 5H, 6H (hardest). The conical mandrel test is conducted according to ASTM 522-85 by bending a panel over a 15 second period using a conical mandrel (Gardner Laboratory, Inc.) of a specified size. A pass or fail is recorded.

The flexibility of the coatings was determined in accordance with ASTM 4145-83 at ambient temperature by bending or folding a coated panel back against itself, using a hydraulic jack pressurized to 20,000 pounds per square inch (psi), until the apex of the bend is as flat as can be reasonably achieved. The initial bend is referred to as 0T meaning that there is nothing (zero thicknesses) between the bent portions of the panel. The bend is examined using a 10X magnifying glass and, if fractures of the coating are observed, the panel is bent a second time (1T) to form a three-layer sandwich. The second bend is inspected for coating fractures and this procedure is repeated, forming 4-, 5-, 6-, etc. layer sandwiches, until a bend exhibits no fractures of the coating. The result of each bend test is the minimum thickness (minimum T-bend) of the bend which does not give any fractures of the coating.

The following reference examples describe the preparation of semi-crystalline, hydroxyl polyesters suitable for use in the manufacture of the powder coating compositions.

### REFERENCE EXAMPLE 1

To a 5-L, 3-neck, round-bottom flask are charged terephthalic acid (1300.6 g, 7.83 mol), neopentyl glycol (132.1 g, 1.27 mol), 1,6-hexanediol (849.1 g, 7.19 mol) and dibutyltin oxide (2.3 g). The flask is purged with nitrogen and heated to 190°C over approximately 1.5 hours. The batch is maintained at 190°C until 15-20% of theoretical condensate has evolved at which time the batch temperature is increased to and maintained at 230°C until the acid number is at or below 10 mg KOH/g polymer. The molten polymer is poured into a syrup can where it cools to a white solid. The polyester thus obtained had an I.V. of 0.310, an ICI melt viscosity at 200°C of 19.0 poise, a hydroxyl number of 50 and an acid number of 5. Differential scanning calorimetry (second cycle) showed a melting point at 126°C, a crystallization temperature of 43°C, a Tg of 10°C, a heat of crystallization of -6.5 cal/g and a heat of fusion of 10.9 cal/g. The polyester had a weight average molecular weight of 14,800 and a number average molecular weight of 3800 (Mw/Mn = 3.89).

### REFERENCE EXAMPLE 2

Terephthalic acid (2092.8 g, 12.60 mol), 1,4-cyclohexanedicarboxylic acid (cis:trans = about 60:40, 114.2 g, 0.66 mol), and butanestannoic acid (FASCAT 4100, 3.5 g) were added to a melt of 1,6-hexanediol (1797 g, 15.20 mol) in a 5 L, 3-necked, round-bottom flask. The contents of the flask were swept with 1.0 standard cubic feet per hour (scfh) nitrogen and heated to 200°C over a period of about 30 minutes. The reaction mixture was heated at 200°C for 3 hours, at 210°C for 2 hours and at 220°C for 1 hour. The temperature then was raised to and maintained at 230°C until the acid number of the polyester was less than 10. The molten polymer was poured into a syrup can where it was allowed to cool to a white solid. The polyester thus obtained had an I.V. of 0.224, an ICI melt viscosity at 200°C of 3.3 poise, a hydroxyl number of 42.5 and an acid number of 2.3. Differential scanning calorimetry showed a melting point at 135°C and a heat of fusion of 10.9 cal/g. No temperature of crystallization was observed. The crystallization half time from the melt at 95°C was 11 seconds and at 60°C was too fast to observe. The polyester had a weight average molecular weight of 9027 and a number average molecular weight of 3666 (Mw/Mn = 2.5).

### REFERENCE EXAMPLE 3

Terephthalic acid (519.6 g, 3.127 mol) and butanestannoic acid (FASCAT 4100, 0.8 g) were added to a melt of 1,6-hexanediol (370.9 g, 3.139 mol) and trimethylolpropane (22.2 g, 0.165 mol) in a 1 L, 3-necked, round-bottom flask. The contents of the flask were swept with 1.0 standard cubic feet per hour (scfh) nitrogen and heated to 200°C over a period of about 30 minutes. The reaction mixture was heated at 200°C for 3 hours, at 210°C for 2 hours and at 220°C for 1 hour. The temperature then was raised to and maintained at 230°C until the acid number of the polyester was less than 10. The molten polymer was poured into a syrup can where it was allowed to cool to a white solid. The polyester thus obtained had an I.V. of 0.30, an ICI melt viscosity of 24 poise, a hydroxyl number of 34 and an acid number of 2. Differential scanning calorimetry showed a melting point at 133°C and a heat of fusion of 8.9 cal/g. The polyester had a weight average molecular weight of 17,098 and a number average molecular weight of 5344.

### REFERENCE EXAMPLE 4

Terephthalic acid (360.5 g, 2.17 mol), adipic acid (16.69 g, 0.114 mol) and butanestannoic acid (FASCAT 4100, 0.6 g) were added to a melt of 1,6-hexanediol (309.6 g, 2.62 mol) in a 1 L, 3-necked, round-bottom flask. The contents of the flask were swept with 1.0 standard cubic feet per hour (scfh) nitrogen and heated to 200°C over a period of about 30 minutes. The reaction mixture was heated at 200°C for 3 hours, at 210°C for 2 hours and at 220°C for 1 hour. The temperature then was raised to and maintained at 230°C until the acid number of the polyester was less than 10. The molten polymer was poured into a syrup can where it was allowed to cool to a white solid. The polyester thus obtained had an I.V. of 0.191, an ICI melt viscosity at 200°C of 3.8 poise, a hydroxyl number of 51.0 and an acid number of 0.4. Differential scanning calorimetry showed a melting point at 139°C, a crystallization temperature of 39°C and a heat of fusion of 11.8 cal/g. The crystallization half time from the melt at 95°C was 25 seconds and at 60°C, less than 12 seconds. The polyester had a weight average molecular weight of 7679 and a number average molecular weight of 3564.

### REFERENCE EXAMPLE 5

Terephthalic acid (253.87 g, 1.523 mol), 1,4-cyclohexanedicarboxylic acid (cis:trans = about 60:40, 48.4 g, 0.27 mol), and butanestannoic acid (FASCAT 4100, 0.6 g) were added to a melt of 1,10-decanediol (369.9 g, 2.13 mol) in a 5 L, 3-necked, round-bottom flask. The contents of the flask were swept with 1.0 standard cubic feet per hour (scfh) nitrogen and heated to 200°C over a period of about 30 minutes. The reaction mixture was heated at 200°C for 3 hours, at 210°C for 2 hours and at 220°C for 1 hour. The temperature then was raised to and maintained at 230°C until the acid number of the polyester was less than 10. The molten polymer was poured into a syrup can where it was allowed to cool to a white solid. The polyester thus obtained had an I.V. of 0.222, an ICI melt viscosity at 200°C of 2.4 poise, a hydroxyl number of 43.0 and an acid number of 0.2. Differential scanning calorimetry showed a melting point at 116°C and a heat of fusion of 15.1 cal/g. No crystallization temperature was observed. The crystallization half time from the melt at 95°C was 45 seconds and at 60°C, less than 12 seconds. The polyester had a weight average molecular weight of 9746 and a number average molecular weight of 4451.

### REFERENCE EXAMPLE 6

Terephthalic acid (284.25 g, 1.711 mol), 1,4-cyclohexanedicarboxylic acid (16.0 g, 0.090 mol) and butanestannoic acid (FASCAT 4100, 0.6 g) were added to a melt of 1,10-decanediol (370.6 g, 2.31 mol) in a 1 L, 3-necked, round-bottom flask. The contents of the flask were swept with 1.0 standard cubic feet per hour (scfh) nitrogen and heated to 200°C over a period of about 30 minutes. The reaction mixture was heated at 200°C for 3 hours, at 210°C for 2 hours and at 220°C for 1 hour. The temperature then was raised to and maintained at 230°C until the acid number of the polyester was less than 10. The molten polymer was poured into a syrup can where it was allowed to cool to a white solid. The polyester thus obtained had an I.V. of 0.236, an ICI melt viscosity at 200°C of 2.4 poise, a hydroxyl number of 42.0 and an acid number of 0.2. Differential scanning calorimetry showed a melting point at 122°C and a heat of fusion of 16.0 cal/g. The crystallization half time from the melt at 95°C was 15 seconds and was too fast to measure at 60°C. The polyester had a weight average molecular weight of 9915 and a number average molecular weight of 4492.

### REFERENCE EXAMPLE 7

Terephthalic acid (304.0 g, 1.830 mol) and butanestannoic acid (FASCAT 4100, 0.6 g) were added to a melt of 1,10-decanediol (356.1 g, 2.046 mol) and 2,2-dimethyl-1,3-propanediol (11.2 g, 0.106 mol)in a 1 L, 3-necked, round-bottom flask. The contents of the flask were swept with 1.0 standard cubic feet per hour (scfh) nitrogen and heated to 200°C over a period of about 30 minutes. The reaction mixture was heated at 200°C for 3 hours, at 210°C for 2 hours and at 220°C for 1 hour. The temperature then was raised to and maintained at 230°C until the acid number of the polyester was less than 10. The molten polymer was poured into a syrup can where it was allowed to cool to a white solid. The polyester thus obtained had an I.V. of 0.209, an ICI melt viscosity at 200°C of 2.4 poise, a hydroxyl number of 46 and an acid number of 2. Differential scanning calorimetry showed a melting temperature at 123°C and a heat of fusion of 16.0 cal/g. The polyester had a weight average molecular weight of 9786 and a number average molecular weight of 4451.

The powder coating compositions described in the following examples were prepared from a semi-crystalline, hydroxyl polyester, an amorphous, hydroxyl polyester and a hydroxyl acrylic polymer supplied by S.C. Johnson & Co. One of the acrylic polymers, referred to hereinbelow as SCJ-800B had an ICI melt viscosity of 25 poise, a hydroxyl number of 43 and a Tg of 43°C. Another hydroxyl acrylic polymer employed, referred to herein below as SCJ-587, had a hydroxyl number of 92, a Tg of 45°C and a molecular weight of 5400. The amorphous polyester employed was Cargill 3002 having, according to its manufacturer, an ICI melt viscosity at 200°C of 40 poise, a hydroxyl number of 115, an acid number of less than 15 and a Tg of 50°C.

### EXAMPLE 1

A powder coating composition was prepared from the following materials:
495.2 g Polyester of Reference Example 2;
193.2 g Amorphous polyester (Cargill 3002);
247.6 g Hydroxyl acrylic polymer (SCJ-800B);
271.7 g Caprolactam-blocked isophorone polyisocyanate (Hüls B-1530);
18.1 g Dibutyltin dilaurate on silica;
18.1 g Benzoin;
14.5 g Modaflow flow control agent;
217.4 g Barium sulfate; and
24.2 g Carbon black
The above materials were mixed in a Henschel high speed mixer for 45 to 60 seconds and compounded in a W&P twin screw, 30 mm extruder. The extruder temperature profile was: zone 1 = 110°C, zone 2 = 100°C. The extrudate was cooled through a chilled roll and ground in a Bantam mill to which a stream of liquid nitrogen was fed and classified through a 170 mesh screen using a Kemutek classifier. The finely-divided, powder coating composition obtained had an average particle size of about 50 microns.

The powder coating composition prepared in Example 1 was applied electrostatically to one side of the 3 inch by 9 inch panels described hereinabove. The coatings were cured (cross-linked) by heating the coated panels at 375°F (190.5°C) in an oven for 20 minutes. The cured coatings were about 2.0 mils (about 50 microns) thick.

The coatings on the panels had both front and back impact strengths of 160 inch-pounds, a 60° gloss value of 32 and a pencil hardness of 3H. The coated panels passed a 0.125 inch conical mandrel test, had a cross-hatch adhesion test value of 100% pass and a flexibility rating of 2-T.

### EXAMPLE 2

The procedures of Example 1 were repeated using the following materials:
487.7 g Polyester of Reference Example 2;
91.6 g Amorphous polyester (Cargill 3002);
368.8 g Hydroxyl acrylic polymer (SCJ-800B);
241.5 g Caprolactam-blocked isophorone polyisocyanate (Hüls B-1530);
29.7 g Dibutyltin dilaurate on silica;
17.8 g Benzoin;
25.0 g Modaflow flow control agent; and
214.1 g Barium sulfate; and
23.8 g Carbon black.

The coatings on the panels had both front and back impact strengths of 160 inch-pounds, a 60° gloss value of 26 and a pencil hardness of 7H. The coated panels passed a 0.125 inch conical mandrel test, had a cross-hatch adhesion test value of 100% pass and a flexibility rating of 2-T.

### EXAMPLE 3

The procedures of Example 1 were repeated using the following materials:
491.2 g Polyester of Reference Example 2;
291.1 g Amorphous polyester (Cargill 3002);
117.4 g Hydroxyl acrylic polymer (SCJ-800B);
298.3 g Caprolactam-blocked isophorone polyisocyanate (Hüls B-1530);
24.0 g Dibutyltin dilaurate on silica;
18.0 g Benzoin;
20.4 g Modaflow flow control agent; and
215.7 g Barium sulfate; and
24.0 g Carbon black.

The coatings on the panels had both front and back impact strengths of 160 inch-pounds, a 60° gloss value of 28 and a pencil hardness of 5H. The coated panels passed a 0.125 inch conical mandrel test, had a cross-hatch adhesion test value of 100% pass and a flexibility rating of 1-T.

### COMPARATIVE EXAMPLE 1

A powder coating composition was formulated from the materials set forth below, compounded and evaluated as described in Example 1.
1632.1 g Hydroxyl acrylic polymer SCJ-800B
310.9 g Caprolactam-blocked isophorone polyisocyanate (Hüls B-1530);
38.9 g Dibutyltin dilaurate;
19.4 g Benzoin;
23.3 g Modaflow flow control agent; and
971.5 g Titanium dioxide.

The coatings on the panels had front and back impact strengths of less than 20 and 20 inch-pounds, respectively, 20° and 60° gloss values of 59 and 98, respectively, and a pencil hardness of 5H. None of the coated panels passed a 0.125 inch conical mandrel test and none passed the cross-hatch adhesion test.

### COMPARATIVE EXAMPLE 2

A powder coating composition was formulated from the materials set forth below, compounded and evaluated as described in Example 1.
1379.5 g Hydroxyl acrylic polymer SCJ-587
563.5 g Caprolactam-blocked isophorone polyisocyanate (Hüls B-1530);
38.9 g Dibutyltin dilaurate;
19.4 g Benzoin;
23.3 g Modaflow flow control agent; and
971.5 g Titanium dioxide.

The coatings on the panels had both front and back impact strengths of less than 20 inch-pounds, 20° and 60° gloss values of 35 and 90, respectively, and a pencil hardness of 5H. None of the coated panels passed a 0.125 inch conical mandrel test and none passed the cross-hatch adhesion test.

### COMPARATIVE EXAMPLE 3

A powder coating composition was formulated from the materials set forth below, compounded and evaluated as described in Example 1. The amorphous hydroxyl polyester used in this example is a commercially-available polyester supplied by Ruco Polymer Corporation as Rucote 107 and has an ICI melt viscosity of 40, a hydroxyl number of 47 and a Tg of 58°C.
311.0 g Amorphous polyester (Rucote 107);
478.2 g Hydroxyl acrylic polymer SCJ-800B;
182.7 g Caprolactum-blocked isophorone polyisocyanate (Hüls B-1530);
38.9 g Dibutyltin dilaurate;
19.4 g Benzoin;
23.3 g Modaflow flow control agent; and
971.5 g Titanium dioxide.

The coatings on the panels had front and back impact strengths of 100 and <20 inch-pounds, respectively, 20° and 60° gloss values of 5 and 30 respectively, and a pencil hardness of 4H. The coated panels had a 0.125 inch conical mandrel test pass value of 90% and had a cross-hatch adhesion test value of 100% pass.

### COMPARATIVE EXAMPLE 4

A powder coating composition was formulated from the materials set forth below, compounded and evaluated as described in Example 1.
965.7 g Amorphous polyester (Rucote 107);
643.1 g Hydroxyl acrylic polymer SCJ-800B;
334.2 g Caprolactam-blocked isophorone polyisocyanate (Hüls B-1530);
38.9 g Dibutyltin dilaurate;
19.4 g Benzoin;
23.3 g Modaflow flow control agent; and
971.5 g Titanium dioxide.

The coatings on the panels had front and back impact strengths of 20 and <20 inch-pounds, respectively, 20° and 60° gloss values of 34 and 80 respectively, and a pencil hardness of 3H. The coated panels has a 0.125 inch conical mandrel test pass value of 25% and had a cross-hatch adhesion test value of 100% pass.

### COMPARATIVE EXAMPLE 5

A powder coating composition was formulated from the materials set forth below, compounded and evaluated as described in Example 1.
311.0 g Amorphous polyester (Rucote 107);
396.6 g Hydroxyl acrylic polymer SCJ-587;
264.4 g Caprolactam-blocked isophorone polyisocyanate (Hüls B-1530);
38.9 g Dibutyltin dilaurate;
19.4 g Benzoin;
23.3 g Modaflow flow control agent; and
971.5 g Titanium dioxide.

The coatings on the panels had front and back impact strengths of 60 and <20 inch-pounds, respectively, 20° and 60° gloss values of 7 and 44 respectively, and a pencil hardness of 5H. The coated panels had a 0.125 inch conical mandrel test pass value of 50% and had a cross-hatch adhesion test value of 100% pass.

### COMPARATIVE EXAMPLE 6

A powder coating composition was formulated from the materials set forth below, compounded and evaluated as described in Example 1.
901.6 g Amorphous polyester (Rucote 107);
600.4 g Hydroxyl acrylic polymer SCJ-587;
441.1 g Caprolactam-blocked isophorone polyisocyanate (Hüls B-1530);
38.9 g Dibutyltin dilaurate;
19.4 g Benzoin;
23.3 g Modaflow flow control agent; and
971.5 g Titanium dioxide.

The coatings on the panels had front and back impact strengths of 40 and 20 inch-pounds, respectively, 20° and 60° gloss values of 14 and 54 respectively, and a pencil hardness of 4H. None of the coated panels passed the 0.125 inch conical mandrel and had a cross-hatch adhesion test value of 100% pass.

### COMPARATIVE EXAMPLE 7

A powder coating composition was formulated from the materials set forth below, compounded and evaluated as described in Example 1.
1593.3 g Amorphous polyester (Rucote 107);
349.7 g Caprolactam-blocked isophorone polyisocyanate (Hüls B-1530);
38.9 g Dibutyltin dilaurate;
19.4 g Benzoin;
23.3 g Modaflow flow control agent; and
971.5 g Titanium dioxide.

The coatings on the panels had both front and back impact strengths of 160 inch-pounds, 20° and 60° gloss values of 86 and 95 respectively, and a pencil hardness of 2H. The coated panels had a 0.125 inch conical mandrel test pass value of 100% and had a cross-hatch adhesion test value of 100% pass.

### COMPARATIVE EXAMPLE 8

A powder coating composition was formulated from the materials set forth below, compounded and evaluated as described in Example 1.
332.0 g Polyester of Reference Example 1;
68.0 g Caprolactam-blocked isophorone polyisocyanate (Hüls B-1530);
4.0 g Dibutyltin dilaurate;
2.0 g Benzoin;
4.0 g Modaflow flow control agent; and
160.0 g Titanium dioxide.

The coatings on the panels had both front and back impact strengths of 160 inch-pounds, 20° and 60° gloss values of 64 and 89 respectively, and a pencil hardness of F. The coated panels passed a 0.125 inch conical mandrel test and had a cross-hatch adhesion test value of 100% pass.

### COMPARATIVE EXAMPLE 9

A powder coating composition was formulated from the materials set forth below, compounded and evaluated as described in Example 1.
132.8 g Polyester of Reference Example 1;
196.8 g Amorphous polyester (Rucote 107);
70.4 g Caprolactam-blocked isophorone polyisocyanate (Hüls B-1530);
4.0 g Dibutyltin dilaurate;
2.0 g Benzoin;
4.0 g Modaflow flow control agent; and
160.0 g Titanium dioxide.

The coatings on the panels had both front and back impact strengths of 160 inch-pounds, 20° and 60° gloss values of 71 and 91 respectively, and a pencil hardness of H. The coated panels passed a 0.125 inch conical mandrel test and had a cross-hatch adhesion test value of 100% pass.

The invention has been described in detail with particular reference to preferred embodiments thereof, but it will be understood that variations and modifications will be effected within the spirit and scope of the invention.

## Claims

1. A coating composition characterized by producing on shaped metal articles coatings which exhibit an ASTM D-523-85 60° gloss value of not greater than 35, an ASTM D2794-84 front/back impact strength values of at least 40/20 inch-pounds, an ASTM D-3359-83 cross-hatch adhesion pass percent value of at least 90, a pencil hardness of at least H and an ASTM 4145-83 flexibility of 2T or better comprising an intimate blend in the form of a powder having an average particle size of 10 to 300 microns of:
(1) 50 to 90 weight percent, based on the weight of (1) and (2), of a hydroxyl polyester component comprised of:
(A) 50 to 90 weight percent, based on the weight of the hydroxyl polyester component, of a semi-crystalline polyester having a glass transition temperature of less than 50°C, a hydroxyl number of 20 to 100, an inherent viscosity of 0.1 to 0.5, a melting range of 70 to 150°C, a number average molecular weight of 1500 to 10,000, and a heat of fusion (second heating cycle of DSC) of greater than 5 cal/g-°C, e.g. 5 to 20 cal/g-°C; wherein said polyester is comprised of (1) a diacid component comprised of at least 50, preferably at least 90 mole percent terephthalic or 1,4-cyclohexanedicarboxylic acid residues and (2) diol residues comprised of 0 to 20 mole percent 2,2-dimethyl-1,3-propanediol residues and 80 to 100 mole percent of residues of one or more diols having the formula ―O―(CH₂)ₙ―O― wherein n is 4 to 12; and
(B) 10 to 50 weight percent, based on the weight of the hydroxyl polyester component, of an amorphous polyester having a glass transition temperature of greater than 40°C, a hydroxyl number of 20 to 120 and an inherent viscosity of 0.1 to 0.5;
(2) 10 to 50 weight percent, based on the weight of (1) and (2), of a hydroxyl acrylic polymer having a glass transition temperature of greater than 40°C and a hydroxyl number of 20 to 100; and
(3) a cross-linking effective amount of a blocked polyisocyanate compound.

2. A thermosetting coating composition according to Claim 1 wherein the semi-crystalline polyester has a Tg of less than 30°C, a melting point of 90 to 140°C, a hydroxyl number of 30 to 80, an inherent viscosity of 0.1 to 0.5, a number average molecular weight of 2000 to 6000 and a heat of fusion (second heating cycle of differential scanning calorimetry) greater than 8 cal/g-°C.

3. A thermosetting coating composition according to Claim 2 wherein the blocked polyisocyanate compound is an ε-caprolactam-blocked isophorone diisocyanate compound or an ε-caprolactam-blocked 2,4-toluene diisocyanate compound.

4. A thermosetting coating composition according to Claim 2 wherein the blocked polyisocyanate compound is an adduct of the 1,3-diazetidine-2,4-dione dimer of isophorone diisocyanate and a diol having the structure 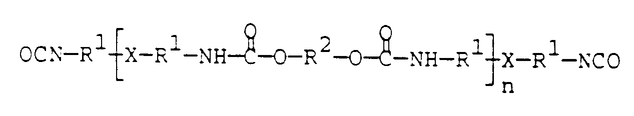 wherein
R¹ is a divalent 1-methylene-1,3,3-trimethyl-5-cyclohexyl radical;
R² is a divalent aliphatic, cycloaliphatic, araliphatic or aromatic residue of a diol; and
X is a 1,3-diazetidine-2,4-dionediyl radical; wherein the ratio of NCO to OH groups in the formation of the adduct is 1:0.5 to 1:0.9, the mole ratio of diazetidinedione to diol is from 2:1 to 6:5, the content of free isocyanate groups in the adduct is not greater than 8 weight percent and the adduct has a molecular weight of 500 to 4000 and a melting point of 70 to 130°C.

5. A coating composition characterized by producing on shaped metal articles coatings which exhibit an ASTM D-523-85 60° gloss value of not greater than 30, ASTM D2794-84 front/back impact strength values of at least 160/160, an ASTM D-3359-83 cross-hatch adhesion pass percent value of at least 90, a pencil hardness of at least H and an ASTM 4145-83 flexibility of 2T or better comprising an intimate blend in the form of a powder having an average particle size of 15 to 75 microns of:
(1) 50 to 90 weight percent, based on the weight of (1) and (2), of a hydroxyl polyester component comprised of:
(A) 50 to 90 weight percent, based on the weight of the hydroxyl polyester component, of a semi-crystalline polyester having a Tg of less than 30°C, a melting point of 90 to 140°C, a hydroxyl number of 30 to 80, an inherent viscosity of 0.1 to 0.5, a number average molecular weight of 2000 to 6000 and a heat of fusion (second heating cycle of differential scanning calorimetry) greater than 8 cal/g-°C;
(B) 10 to 50 weight percent, based on the weight of the hydroxyl polyester component, of an amorphous polyester having a glass transition temperature of greater than 40°C, a hydroxyl number of 20 to 120 and an inherent viscosity of 0.1 to 0.5 comprised of
(i) diacid residues of which at least 50 mole percent are terephthalic acid residues;
(ii) glycol residues of which at least 50 mole percent are derived from 2,2-dimethyl-1,3-propanediol; and
(iii)up to 10 mole percent, based on the total moles of (i), (ii) and (iii), of trimethylolpropane residues ;
(2) 10 to 50 weight percent, based on the weight of (1) and (2), of a hydroxyl acrylic polymer having a glass transition temperature of greater than 40°C and a hydroxyl number of 20 to 100; and
(3) about 5 to 30 weight percent, based on the total weight of (1), (2) and (3), of a blocked polyisocyanate compound.

6. A coating composition according to Claim 5 wherein the blocked polyisocyanate compound is a caprolactam-blocked polyisocyanate compound and wherein the composition contains a cross-linking catalyst.

7. A coating composition according to Claim 5 wherein the blocked polyisocyanate compound is an adduct of the 1,3-diazetidine-2,4-dione dimer of isophorone diisocyanate and a diol having the structure 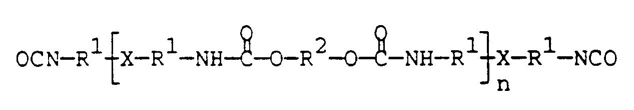 wherein
R¹ is a divalent 1-methylene-1,3,3-trimethyl-5-cyclohexyl radical;
R² is a divalent aliphatic residue of a diol; and X is a 1,3-diazetidine-2,4-dionediyl radical; wherein the ratio of NCO to OH groups in the formation of the adduct is 1:0.6 to 1:0.8, the mole ratio of diazetidinedione to diol is from 2:1 to 6:5, the content of free isocyanate groups in the adduct is not greater than 8 weight percent and the adduct has a molecular weight of 1450 to 2800 and a melting point of 85 to 120°C and wherein the composition contains a cross-linking catalyst.

8. A coating composition characterized by producing on shaped metal articles coatings which exhibit an ASTM D-523-85 60° gloss value of not greater than 30, ASTM D2794-84 front/back impact strength values of at least 160/160 inch-pounds, an ASTM D-3359-83 cross-hatch adhesion pass percent value of at least 90, a pencil hardness of at least H and an ASTM 4145-83 flexibility of 2T or better comprising an intimate blend in the form of a powder having an average particle size of 15 to 75 microns of:
(1) 50 to 90 weight percent, based on the weight of (1) and (2), of a hydroxyl polyester component comprised of:
(A) 50 to 90 weight percent, based on the weight of the blend of polymers, of a semi-crystalline polyester having a Tg of less than 30°C, a melting point of 90 to 140°C, a hydroxyl number of 30 to 80, an inherent viscosity of 0.1 to 0.5, a number average molecular weight of 2000 to 6000 and a heat of fusion (second heating cycle of differential scanning calorimetry) greater than 8 cal/g-°C and comprised of:
(i) diacid residues consisting essentially of about 85 to 95 mole percent terephthalic acid residues and 5 to 15 mole percent 1,4-cyclohexanedicarboxylic acid residues; and
(ii) diol residues consisting essentially of residues having the formula -O-(CH₂)ₙ-O-wherein n is 6 to 12;
(B) 10 to 50 weight percent, based on the weight of (1) and (2), of an amorphous polyester having a glass transition temperature of greater than 40°C, a hydroxyl number of 20 to 120 and an inherent viscosity of 0.1 to 0.5 comprised of
(i) diacid residues of which at least 50 mole percent are terephthalic acid residues;
(ii) glycol residues of which at least 50 mole percent are derived from 2,2-dimethyl-1,3-propanediol; and
(iii)up to 10 mole percent, based on the total moles of (i), (ii) and (iii), of trimethylolpropane residues ;
(2) 10 to 50 weight percent, based on the weight of (1) and (2), of a hydroxyl acrylic polymer having a glass transition temperature (Tg) of greater than 40°C, a hydroxyl number of 20 to 100;
(3) 10 to 25 weight percent, based on the total weight of (1), (2) and (3) of a blocked polyisocyanate compound;
(4) an acrylic polymer flow aid; and
(5) a cross-linking catalyst selected from organo-tin compounds.

9. A coating composition according to Claim 8 wherein the semi-crystalline polyester component is comprised of diacid residues consisting of 85 to 95 mole percent terephthalic acid residues and 5 to 15 mole percent 1,4-cyclohexanedicarboxylic acid residues and diol residues consisting of 1,6-hexanediol residues and wherein the amorphous polyester has a glass transition temperature of 50 to 65, a hydroxyl number of 35 to 120, an acid number of less than 10 and an inherent viscosity of 0.1 to 0.25 and consists essentially of terephthalic acid residues, 2,2-dimethyl-1,3-propanediol residues and up to 10 mole percent, based on the total moles of trimethylolpropane and 2,2-dimethyl-1,3-propanediol, of trimethylolpropane residues.

10. A shaped metal article coated with the reaction product of a composition comprising:
(1) 50 to 90 weight percent, based on the weight of (1) and (2), of a hydroxyl polyester component comprised of:
(A) 50 to 90 weight percent, based on the weight of the hydroxyl polyester component, of a semi-crystalline polyester having a glass transition temperature (Tg) of less than 50°C, a hydroxyl number of 20 to 100, an inherent viscosity of 0.1 to 0.5, a melting range of 70 to 150°C, a number average molecular weight of 1500 to 10,000, and a heat of fusion (second heating cycle of DSC) of greater than 5 cal/g-°C, e.g. 5 to 20 cal/g-°C; and
(B) 10 to 50 weight percent, based on the weight of the hydroxyl polyester component, of an amorphous polyester having a glass transition temperature of greater than 40°C, a hydroxyl number of 20 to 120 and an inherent viscosity of 0.1 to 0.5;
(2) 10 to 50 weight percent, based on the weight of (1) and (2), of a hydroxyl acrylic polymer having a glass transition temperature (Tg) of greater than 40°C and a hydroxyl number of 20 to 100; and
(3) a cross-linking effective amount of a blocked polyisocyanate compound; said coated article
exhibiting an ASTM D-523-85 60° gloss value of not greater than 35, an ASTM D2794-84 front/back impact strength values of at least 40/20 inch-pounds, an ASTM D-3359-83 cross-hatch adhesion pass percent value of at least 90, a pencil hardness of at least H and an ASTM 4145-83 flexibility of 2T or better.

11. An article according to Claim 10 coated with the reaction product of a composition comprising:
(1) 50 to 90 weight percent, based on the weight of (1) and (2), of a hydroxyl polyester component comprised of:
(A) 50 to 90 weight percent, based on the weight of the hydroxyl polyester component, of a semi-crystalline polyester having a Tg of less than 30°C, a melting point of 90 to 140°C, a hydroxyl number of 30 to 80, an inherent viscosity of 0.1 to 0.5, a number average molecular weight of 2000 to 6000 and a heat of fusion (second heating cycle of differential scanning calorimetry) greater than 8 cal/g-°C;
(B) 10 to 50 weight percent, based on the weight of the hydroxyl polyester component, of an amorphous polyester having a glass transition temperature of greater than 40°C, a hydroxyl number of 20 to 120 and an inherent viscosity of 0.1 to 0.5 comprised of
(i) diacid residues of which at least 50 mole percent are terephthalic acid residues;
(ii) glycol residues of which at least 50 mole percent are derived from 2,2-dimethyl-1,3-propanediol; and
(iii)up to 10 mole percent, based on the total moles of (i), (ii) and (iii), of trimethylolpropane residues ;
(2) 10 to 50 weight percent, based on the weight of (1) and (2), of a hydroxyl acrylic polymer having a glass transition temperature of greater than 40°C and a hydroxyl number of 20 to 100; and
(3) 5 to 30 weight percent, based on the total weight of (1), (2) and (3), of a blocked polyisocyanate compound.

## Patentansprüche

1. Beschichtungszusammensetzung, die dadurch gekennzeichnet ist, daß sie auf geformten Metallgegenständen Beschichtungen erzeugt, die einen ASTM D-523-85 60°-Glanzwert von nicht größer als 35, ASTM D-2794-84 Vorderseiten/Rückseiten-Schlagfestigkeitswerte von mindestens 40/20 Inch-Pfunde, einen ASTM D-3359-83 kreuzweise Adhäsionserfüllungsprozentwert von mindestens 90, eine Bleistifthärte von mindestens H und eine ASTM 4145-83 Flexibilität von 2T oder besser zeigen, umfassend eine innige Mischung in der Form eines Pulvers mit einer durchschnittlichen Teilchengröße von 10 bis 300 µm aus:
(1) 50 bis 90 Gew.-%, bezogen auf das Gewicht von (1) und (2), eines Hydroxylpolyester-Bestandteils bestehend aus:
(A) 50 bis 90 Gew.-%, bezogen auf das Gewicht des Hydroxylpolyester-Bestandteils, eines semikristallinen Polyesters mit einer Glasübergangstemperatur von weniger als 50°C, einer Hydroxylzahl von 20 bis 100, einer inhärenten Viskosität von 0,1 bis 0,5, einem Schmelzbereich von 70 bis 150°C, einem Zahlenmittel-Molekulargewicht von 1.500 bis 10.000, einer Schmelzwärme (zweiter Aufwärmzyklus bei der DSC) von mehr als 5 cal/g-°C, d.h. 5 bis 20 cal/g-°C, wobei der Polyester aus (1) einem Disäure-Bestandteil aus mindestens 50, vorzugsweise mindestens 90 mol-% Terephthalsäure- oder 1,4-Cyclohexandicarbonsäure-Resten und (2) Diol-Resten aus 0 bis 20 mol-% 2,2-Dimethyl-1,3-propandiol-Resten und 80 bis 100 mol-% Resten eines oder mehrerer Diole mit der Formel -O-(CH₂)ₙ-O-, wobei n 4 bis 12 ist, besteht und
(B) 10 bis 50 Gew.-%, bezogen auf das Gewicht des Hydroxylpolyester-Bestandteils, eines amorphen Polyesters mit einer Glasübergangtemperatur von größer als 40°C, einer Hydroxylzahl von 20 bis 120 und einer inhärenten Viskosität von 0,1 bis 0,5;
(2) 10 bis 50 Gew.-%, bezogen auf das Gewicht von (1) und (2), eines Hydroxylacrylpolymers mit einer Glasübergangstemperatur von größer als 40°C und einer Hydroxylzahl von 20 bis 100 und
(3) einer blockierten Polyisocyanatverbindung in einer die Quervernetzung bewirkenden Menge.

2. Wärmehärtbare Beschichtungszusammensetzung nach Anspruch 1, wobei der semikristalline Polyester eine T_{g} von weniger als 30°C, einen Schmelzpunkt von 90 bis 140°C, eine Hydroxylzahl von 30 bis 80, eine inhärente Viskosität von 0,1 bis 0,5, ein Zahlenmittel-Molekulargewicht von 2.000 bis 6.000 und eine Schmelzwärme (zweiter Aufwärmzyklus bei der Differentialscanning-Calorimetrie) größer als 8 cal/g-°C hat.

3. Wärmehärtbare Beschichtungszusammensetzung nach Anspruch 2, wobei die blockierte Polyisocyanatverbindung eine ε-Caprolactam-blockierte Isophorondiisocyanatverbindung oder eine ε-Caprolactam-blockierte 2,4-Toluoldiisocyanatverbindung ist.

4. Wärmehärtbare Beschichtungszusammensetzung nach Anspruch 2, wobei die blockierte Polyisocyanatverbindung ein Addukt des 1,3-Diazetidin-2,4-diondimers des Isophorondiisocyanats und eines Diols mit der Struktur 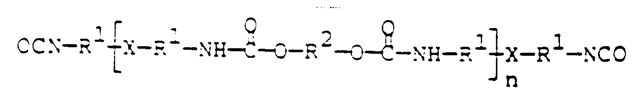 ist, wobei
R¹ ein zweiwertiger 1-Methylen-1,3,3-trimethyl-5-cyclohexyl-Rest ist,
R² ist ein zweiwertiger aliphatischer, cycloaliphatischer, araliphatischer oder aromatischer Rest eines Diols und
X ist ein 1,3-Diazetidin-2,4-diondiyl-Rest,
wobei das Verhältnis NCO- zu OH-Gruppen bei der Bildung des Addukts 1 : 0,1 bis 1 : 0,9 ist, das Molverhältnis Diazetidindion zu Diol ist von 2 : 1 bis 6 : 5, der Gehalt an freien Isocyanatgruppen im Addukt ist nicht größer als 8 Gew.-% und das Addukt hat ein Molekulargewicht von 500 bis 4.000 und einen Schmelzpunkt von 70 bis 130°C.

5. Beschichtungszusammensetzung, dadurch gekennzeichnet, daß sie auf geformten Metallgegenständen Beschichtungen erzeugt, die einen ASTM D-523-85 60°-Glanzwert von nicht größer als 30, ASTM D-2794-84 Vorderseiten/Rückseiten-Schlagfestigkeitswerte von mindestens 160/160 Inch-Pfunde, einen ASTM D-3359-83 kreuzweise Adhäsionserfüllungsprozentwert von mindestens 90, eine Bleistifthärte von mindestens H und eine ASTM 4145-83 Flexibilität von 2T oder besser zeigen, umfassend eine innige Mischung in der Form eines Pulvers mit einer durchschnittlichen Teilchengröße von 15 bis 75 µm aus:
(1) 50 bis 90 Gew.-%, bezogen auf das Gewicht von (1) und (2), eines Hydroxylpolyester-Bestandteils bestehend aus:
(A) 50 bis 90 Gew.-%, bezogen auf das Gewicht des Hydroxylpolyester-Bestandteils, eines semikristallinen Polyesters mit einer T_{g} von weniger als 30°C, einem Schmelzpunkt von 90 bis 140°C, einer Hydroxylzahl von 30 bis 80, einer inhärenten Viskosität von 0,1 bis 0,5, einem Zahlenmittel-Molekulargewicht von 2.000 bis 6.000 und einer Schmelzwärme (zweiter Aufwärmzyklus bei der Differentialscanning-Calorimetrie) größer als 8 cal/g-°C,
(B) 10 bis 50 Gew.-%, bezogen auf das Gewicht des Hydroxylpolyester-Bestandteils, eines amorphen Polyesters mit einer Glasübergangstemperatur von größer als 40°C, einer Hydroxylzahl von 20 bis 120 und einer inhärenten Viskosität von 0,1 bis 0,5 bestehend aus
(i) Disäure-Resten, von denen mindestens 50 mol-% Terephthalsäure-Reste sind,
(ii) Glykol-Resten, von denen mindestens 50 mol-% von 2,2-Dimethyl-1,3-propandiol abgeleitet sind und
(iii) bis zu 10 mol-%, bezogen auf die Gesamtmole (i), (ii) und (iii), Trimethylolpropan-Reste,
(2) 10 bis 50 Gew.-%, bezogen auf das Gewicht von (1) und (2), eines Hydroxylacrylpolymers mit einer Glasübergangstemperatur von größer als 40°C und einer Hydroxylzahl von 20 bis 100 und
(3) etwa 5 bis 30 Gew.-%, bezogen auf das Gesamtgewicht von (1), (2) und (3), einer blockierten Polyisocyanatverbindung.

6. Beschichtungszusammensetzung nach Anspruch 5, wobei die blockierte Polyisocyanatverbindung eine Caprolactam-blockierte Polyisocyanatverbindung ist und wobei die Zusammensetzung einen Quervernetzungskatalysator enthält.

7. Beschichtungszusammensetzung nach Anspruch 5, wobei die blockierte Polyisocyanatverbindung ein Addukt des 1,3-Diazetidin-2,4-diondimers des Isophorondiisocyanats und eines Diols mit der Struktur 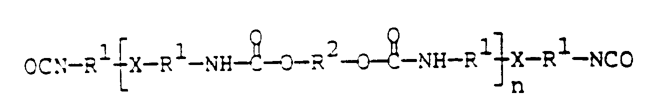 ist, wobei
R¹ ein zweiwertiger 1-Methylen-1,3,3-trimethyl-5-cyclohexyl-Rest ist,
R² ist ein zweiwertiger aliphatischer Rest eines Diols und
X ist ein 1,3-Diazetidin-2,4-diondiyl-Rest, wobei das Verhältnis von NCO- zu OH-Gruppen bei der Bildung des Addukts 1 : 0,6 bis 1 : 0,8 ist, das Molverhältnis von Diazetidindion zu Diol ist von 2 : 1 bis 6 : 5, der Gehalt an freien Isocyanatgruppen im Addukt ist nicht größer als 8 Gew.-% und das Addukt hat ein Molekulargewicht von 1.450 bis 2.800 und einen Schmelzpunkt von 85 bis 120°C, und die Zusammensetzung enthält einen Quervernetzungskatalysator.

8. Beschichtungszusammensetzung, dadurch gekennzeichnet, daß sie auf geformten Metallgegenständen Beschichtungen erzeugt, die einen ASTM D-523-85 60°-Glanzwert von nicht größer als 35, ASTM D-2794-84 Vorderseiten/Rückseiten-Schlagfestigkeitswerte von mindestens 160/160 Inch-Pfunde, einen ASTM D-3359-83 kreuzweise Adhäsionserfüllungsprozentwert von mindestens 90, eine Bleistifthärte von mindestens H und eine ASTM 4145-83 Flexibilität von 2T oder besser zeigen, umfassend eine innige Mischung in der Form eines Pulvers mit einer durchschnittlichen Teilchengröße von 15 bis 75 µm aus:
(1) 50 bis 90 Gew.-%, bezogen auf das Gewicht von (1) und (2), eines Hydroxylpolyester-Bestandteils bestehend aus:
(A) 50 bis 90 Gew.-%, bezogen auf das Gewicht der Mischung aus Polymeren, eines semikristallinen Polyesters mit einer T_{g} von Weniger als 30°C, einem Schmelzpunkt von 90 bis 140°C, einer Hydroxylzahl von 30 bis 80, einer inhärenten Viskosität von 0,1 bis 0,5, einem Zahlenmittel-Molekulargewicht von 2.000 bis 6.000 und einer Schmelzwärme (zweiter Aufwärmzyklus bei der Differentialscanning-Calorimetrie) größer als 8 cal/g-°C, und bestehend aus
(i) Disäure-Resten, die im wesentlichen aus etwa 85 bis 95 mol-% Terephthalsäure-Resten und 5 bis 15 mol-% 1,4-Cyclohexandicarbonsäure-Resten bestehen, und
(ii) Diol-Resten, die im wesentlichen aus Resten mit der Formel -O-(CH₂)ₙ-O- bestehen, wobei n 6 bis 12 ist;
(B) 10 bis 50 Gew.-%, bezogen auf das Gewicht von (1) und (2), eines amorphen Polyesters mit einer Glasübergangstemperatur von größer als 40°C, einer Hydroxylzahl von 20 bis 120 und einer inhärenten Viskosität von 0,1 bis 0,5 bestehend aus
(i) Disäure-Resten, von denen mindestens 50 mol-% Terephthalsäure-Reste sind,
(ii) Glykol-Resten, von denen mindestens 50 mol-% von 2,2-Dimethyl-1,3-propandiol abgeleitet sind und
(iii) bis zu 10 mol-%, bezogen auf die Gesamtmole von (i), (ii) und (iii), Trimethylolpropan-Reste;
(2) 10 bis 50 Gew.-%, bezogen auf das Gewicht von (1) und (2), eines Hydroxylacrylpolymers mit einer Glasübergangstemperatur (T_{g}) von größer als 40°C, einer Hydroxylzahl von 20 bis 100;
(3) 10 bis 25 Gew.-%, bezogen auf das Gesamtgewicht von (1), (2) und (3), einer blockierten Polyisocyanatverbindung,
(4) einer acrylischen Polymer-Fließhilfe und
(5) einem Quervernetzungskatalysator ausgewählt aus Organo-Zinn-Verbindungen.

9. Beschichtungszusammensetzung nach Anspruch 8, wobei der semikristalline Polyester-Bestandteil besteht aus: Disäure-Resten, die aus 85 bis 95 mol-% Terephthalsäure-Resten und 5 bis 15 mol-% 1,4-Cyclohexandicarbonsäure-Resten bestehen, und Diol-Resten, die aus 1,6-Hexandiol-Resten bestehen, und wobei der amorphe Polyester eine Glasübergangstemperatur von 50 bis 65, eine Hydroxylzahl von 35 bis 120, eine Säurezahl von weniger als 10 und eine inhärente Viskosität von 0,1 bis 0,25 hat und im wesentlichen aus Terephthalsäure-Resten, 2,2-Dimethyl-1,3-propandiol-Resten und bis zu 10 mol-%, bezogen auf die Gesamtmole Trimethylolpropan und 2,2-Dimethyl-1,3-propandiol, Trimethylolpropan-Resten besteht.

10. Geformter metallischer Gegenstand, der mit dem Reaktionsprodukt aus einer Zusammensetzung beschichtet ist, welche umfaßt:
(1) 50 bis 90 Gew.-%, bezogen auf das Gewicht von (1) und (2) eines hydroxylischen Polyester-Bestandteils aus:
(A) 50 bis 90 Gew.-%, bezogen auf das Gewicht des hydroxylischen Polyester-Bestandteils, eines semikristallinen Polyesters mit einer Glasübergangstemperatur (T_{g}) weniger als 50°C, einer Hydroxylzahl von 20 bis 100, einer inhärenten Viskosität von 0,1 bis 0,5, einem Schmelzbereich von 70 bis 150°C, einem Zahlenmittel-Molekulargewicht von 1.500 bis 10.000 und einer Schmelzwärme (zweiter Aufwärmzyklus bei der DSC) von größer als 5 cal/g-°C, d.h. 5 bis 20 cal/g-°C; und
(B) 10 bis 50 Gew.-%, bezogen auf das Gewicht des hydroxylischen Polyester-Bestandteils, eines amorphen Polyesters mit einer Glasübergangstemperatur von größer als 40°C, einer Hydroxylzahl von 20 bis 120 und einer inhärenten Viskosität von 0,1 bis 0,5;
(2) 10 bis 50 Gew.-%, bezogen auf das Gewicht von (1) und (2), eines Hydroxylacrylpolymers mit einer Glasübergangstemperatur (T_{g}) von größer als 40°C und einer Hydroxylzahl von 20 bis 100 und
(3) einer blockierten Polyisocyanatverbindung in einer die Quervernetzung bewirkenden Menge;
wobei der beschichtete Gegenstand einen ASTM D-523-85 60°-Glanzwert von nicht größer als 35, ASTM D-2794-85 Vorderseiten/Rückseiten-Schlagfestigkeitswerte von mindestens 40/20 Inch-Pfunde, einen ASTM D-3359-83 kreuzweise Adhäsionserfolgsprozentsatz von mindestens 90, eine Bleistifthärte von mindestens H und eine ASTM 4145-83 Flexibilität von 2T oder besser hat.

11. Gegenstand nach Anspruch 10, beschichtet mit dem Reaktionsprodukt einer Zusammensetzung, welche umfaßt:
(1) 50 bis 90 Gew.-%, bezogen auf das Gewicht von (1) und (2), eines hydroxylischen Polyester-Bestandteils aus:
(A) 50 bis 90 Gew.-%, bezogen auf das Gewicht des hydroxylischen Polyester-Bestandteils, eines semikristallinen Polyesters mit einer T_{g} von weniger als 30°C, einem Schmelzpunkt von 90 bis 140°C, einer Hydroxylzahl von 30 bis 80, einer inhärenten Viskosität von 0,1 bis 0,5, einem Zahlenmittel-Molekulargewicht von 2.000 bis 6.000 und einer Schmelzwärme (Zweiter Aufwärmzyklus bei der differentiellen Scanning-Calorimetrie) von größer als 8 cal/g-°C;
(B) 10 bis 50 Gew.-%, bezogen auf das Gewicht des hydroxylischen Polyester-Bestandteils, eines amorphen Polyesters mit einer Glasübergangstemperatur von größer als 40°C, einer Hydroxylzahl von 20 bis 120 und einer inhärenten Viskosität von 0,1 bis 0,5, bestehend aus
(i) Disäure-Resten, von denen mindestens 50 mol% Terephthalsäure-Reste sind,
(ii) Glykol-Resten, von denen mindestens 50 mol-% von 2,2-Dimethyl-1,3-propandiol abgeleitet sind und
(iii) bis zu 10 mol-%, bezogen auf die Gesamtmole (i), (ii) und (iii), Trimethylolpropan-Reste;
(2) 10 bis 50 Gew.-%, bezogen auf das Gewicht von (1) und (2), eines Hydroxylacrylpolymers mit einer Glasübergangstemperatur von größer als 40°C und einer Hydroxylzahl von 20 bis 100 und
(3) 5 bis 30 Gew.-%, bezogen auf das Gesamtgewicht von (1), (2) und (3), einer blockierten Polyisocyanatverbindung.

## Revendications

1. Composition de revêtement caractérisée en ce qu'elle produit sur des articles façonnés métalliques des revêtements qui présentent un indice de brillance à 60° selon la norme ASTM D-523-85 inférieur ou égal à 35, des valeurs de résistance aux chocs frontaux/arrière ASTM D2794-84 d'au moins 40/20 pouces-livres, un taux de réussite à l'essai d'adhérence au quadrillage au peigne ASTM D-3359-83 d'au moins 90, une dureté de crayon d'au moins H et une flexibilité ASTM-4145-83 d'au moins 2T, constituée d'un mélange intime, sous forme d'une poudre ayant une taille moyenne de particules de 10 à 300 microns, de:
(1) 50 à 90 % en masse, par rapport à la masse de (1) et (2), d'un constituant polyester hydroxylé composé de
(A) 50 à 90 % en masse, par rapport à la masse du constituant polyester hydroxylé, d'un polyester semi-cristallin ayant une température de transition vitreuse inférieure à 50°C, un indice d'hydroxyle de 20 à 100, une viscosité inhérente de 0,1 à 0,5, un intervalle de fusion de 70 à 150°C, une masse moléculaire moyenne en nombre de 1500 à 10 000, et une chaleur de fusion (second cycle de chauffage de DSC (calorimétrie différentielle)) supérieure à 5 cal/g-°C, par exemple de 5 à 20 cal/g-°C; ledit polyester étant composé de (1) un constituant diacide comprenant au moins 50, de préférence au moins 90 % en moles de résidus d'acide téréphtalique ou 1,4-cyclohexanedicarboxylique et (2) de résidus de diols comprenant 0 à 20 % en moles de résidus de 2,2-diméthyl-1,3-propanediol et 80 à 100 % en moles de résidus d'un ou plusieurs diols de formule -O-(CH₂)ₙ-O- dans laquelle n est compris entre 4 et 12; et
(B) 10 à 50 % en masse, par rapport à la masse du constituant polyester hydroxylé, d'un polyester amorphe ayant une température de transition vitreuse supérieure à 40°C, un indice d'hydroxyle de 20 à 120 et une viscosité inhérente de 0,1 à 0,5;
(2) 10 à 50 % en masse, par rapport à la masse de (1) et (2), d'un polymère acrylique hydroxylé ayant une température de transition vitreuse supérieure à 40°C et un indice d'hydroxyle de 20 à 100; et
(3) une quantité efficace pour la réticulation d'un composé de type polyisocyanate bloqué.

2. Composition de revêtement thermodurcissable selon la revendication 1, dans laquelle le polyester semi-cristallin a une température de transition vitreuse inférieure à 30°C, un point de fusion de 90 à 140°C, un indice d'hydroxyle de 30 à 80, une viscosité inhérente de 0,1 à 0,5, une masse moléculaire moyenne en nombre de 2000 à 6000 et une chaleur de fusion (second cycle de chauffage de calorimétrie différentielle) supérieure à 8 cal/g-°C.

3. Composition de revêtement thermodurcissable selon la revendication 2, dans laquelle le composé de type polyisocyanate bloqué est un diisocyanate d'isophorone bloqué avec de l'ε-caprolactame ou un 2,4-diisocyanatotoluène bloqué avec de l'ε-caprolactame.

4. Composition de revêtement thermodurcissable selon la revendication 2, dans laquelle le composé de type polyisocyanate bloqué est un produit d'addition du 1,3-diazétidine-2,4-dione-dimère du diisocyanate d'isophorone et d'un diol, ayant la formule 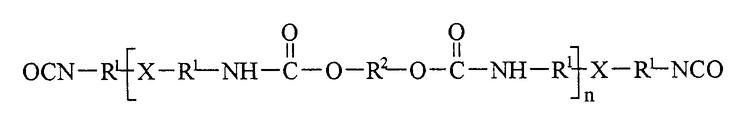 où
R¹ est un radical divalent 1-méthylène-1,3,3-triméthyl-5-cyclohexyle;
R² est un résidu divalent aliphatique, cycloaliphatique, araliphatique ou aromatique d'un diol; et
X est un radical 1,3-diazétidine-2,4-dionediyle;
dans lequel le rapport des groupes NCO aux groupes OH dans la formation du produit d'addition est de 1:0,5 à 1:0,9, le rapport molaire de la diazétidinedione au diol est de 2:1 à 6:5, la teneur en groupes isocyanate libres dans le produit d'addition n'est pas supérieure à 8 % en masse et le produit d'addition a une masse moléculaire de 500 à 4000 et un point de fusion de 70 à 130°C.

5. Composition de revêtement caractérisée en ce qu'elle produit sur des articles façonnés métalliques des revêtements qui présentent un indice de brillance à 60° selon la norme ASTM D-523-85 inférieur ou égal à 30, des valeurs de résistance aux chocs frontaux/arrière ASTM D2794-84 d'au moins 160/160, un taux de réussite à l'essai d'adhérence au quadrillage au peigne ASTM D-3359-83 d'au moins 90, une dureté de crayon d'au moins H et une flexibilité ASTM-4145-83 d'au moins 2T, constituée d'un mélange intime, sous forme d'une poudre ayant une taille moyenne de particules de 15 à 75 microns, de:
(1) 50 à 90 % en masse, par rapport à la masse de (1) et (2), d'un constituant polyester hydroxylé composé de
(A) 50 à 90 % en masse, par rapport à la masse du constituant polyester hydroxylé, d'un polyester semi-cristallin ayant une température de transition vitreuse inférieure à 30°C, un point de fusion de 90 à 140°C, un indice d'hydroxyle de 30 à 80, une viscosité inhérente de 0,1 à 0,5, une masse moléculaire moyenne en nombre de 2000 à 6000, et une chaleur de fusion (second cycle de chauffage de calorimétrie différentielle) supérieure à 8 cal/g-°C;
(B) 10 à 50 % en masse, par rapport à la masse du constituant polyester hydroxylé, d'un polyester amorphe ayant une température de transition vitreuse supérieure à 40°C, un indice d'hydroxyle de 20 à 120 et une viscosité inhérente de 0,1 à 0,5, composé
(i) de résidus de diacides dont aux moins 50 % en moles sont des résidus de l'acide téréphtalique;
(ii) de résidus de glycols dont au moins 50 % en moles dérivent du 2,2-diméthyl-1,3-propanediol; et
(iii) de jusqu'à 10 % en moles, par rapport au nombre total de moles de (i), (ii) et (iii), de résidus de triméthylolpropane;
(2) 10 à 50 % en masse, par rapport à la masse de (1) et (2), d'un polymère acrylique hydroxylé ayant une température de transition vitreuse supérieure à 40°C et un indice d'hydroxyle de 20 à 100; et
(3) environ 5 à 30 % en masse, par rapport à la masse totale de (1), (2) et (3), d'un composé de type polyisocyanate bloqué.

6. Composition de revêtement selon la revendication 5, dans laquelle le composé de type polyisocyanate bloqué est un polyisocyanate bloqué par un caprolactame et dans laquelle la composition contient un catalyseur de réticulation.

7. Composition de revêtement selon la revendication 5, dans laquelle le composé de type polyisocyanate bloqué est un produit d'addition du 1,3-diazétidine-2,4-dione-dimère du diisocyanate d'isophorone et d'un diol, ayant la formule 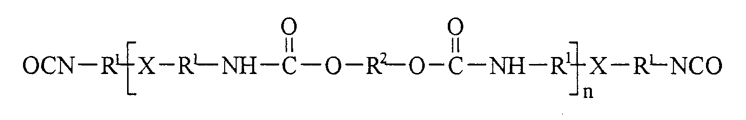 où
R¹ est un radical divalent 1-méthylène-1,3,3-triméthyl-5-cyclohexyle;
R² est un résidu divalent aliphatique d'un diol; et
X est un radical 1,3-diazétidine-2,4-dionediyle;
dans lequel le rapport des groupes NCO aux groupes OH dans la formation du produit d'addition est de 1:0,6 à 1:0,8, le rapport molaire de la diazétidinedione au diol est de 2:1 à 6:5, la teneur en groupes isocyanate libres dans le produit d'addition n'est pas supérieure à 8 % en masse et le produit d'addition a une masse moléculaire de 1450 à 2800 et un point de fusion de 85 à 120°C; et dans laquelle la composition contient un catalyseur de réticulation.

8. Composition de revêtement caractérisée en ce qu'elle produit sur des articles façonnés métalliques des revêtements qui présentent un indice de brillance à 60° selon la norme ASTM D-523-85 inférieur ou égal à 30, des valeurs de résistance aux chocs frontaux/arrière ASTM D2794-84 d'au moins 160/160 pouces-livres, un taux de réussite à l'essai d'adhérence au quadrillage au peigne ASTM D-3359-83 d'au moins 90, une dureté de crayon d'au moins H et une flexibilité ASTM-4145-83 d'au moins 2T, constituée d'un mélange intime, sous forme d'une poudre ayant une taille moyenne de particules de 15 à 75 microns, de:
(1) 50 à 90 % en masse, par rapport à la masse de (1) et (2), d'un constituant polyester hydroxylé composé de
(A) 50 à 90 % en masse, par rapport à la masse du mélange de polymères, d'un polyester semi-cristallin ayant une température de transition vitreuse inférieure à 30°C, un point de fusion de 90 à 140°C, un indice d'hydroxyle de 30 à 80, une viscosité inhérente de 0,1 à 0,5, une masse moléculaire moyenne en nombre de 2000 à 6000, et une chaleur de fusion (second cycle de chauffage de calorimétrie différentielle) supérieure à 8 cal/g-°C, et constitué
(i) de résidus de diacides consistant essentiellement en environ 85 à 95 % en moles de résidus de l'acide téréphtalique et en 5 à 15 % en moles de résidus de l'acide 1,4-cyclohexanedicarboxylique et
(ii) de résidus de diols consistant essentiellement en résidus de formule -O-(CH₂)ₙ-O- dans laquelle n est compris entre 6 et 12;
(B) 10 à 50 % en masse, par rapport à la masse de (1) et (2), d'un polyester amorphe ayant une température de transition vitreuse supérieure à 40°C, un indice d'hydroxyle de 20 à 120 et une viscosité inhérente de 0,1 à 0,5, composé
(i) de résidus de diacides dont aux moins 50 % en moles sont des résidus de l'acide téréphtalique;
(ii) de résidus de glycols dont au moins 50 % en moles dérivent du 2,2-diméthyl-1,3-propanediol;
(iii) de jusqu'à 10 % en moles, par rapport au nombre total de moles de (i), (ii) et (iii), de résidus de triméthylolpropane;
(2) 10 à 50 % en masse, par rapport à la masse de (1) et (2), d'un polymère acrylique hydroxylé ayant une température de transition vitreuse (Tv) supérieure à 40°C et un indice d'hydroxyle de 20 à 100;
(3) 10 à 25 % en masse, par rapport à la masse totale de (1), (2) et (3), d'un composé de type polyisocyanate bloqué;
(4) un auxiliaire d'écoulement de type polymère acrylique; et
(5) un catalyseur de réticulation choisi parmi les composés d'organoétain.

9. Composition de revêtement selon la revendication 8, dans laquelle le constituant polyester semi-cristallin est constitué de résidus de diacides consistant en 85 à 95 % en moles de résidus de l'acide téréphtalique et en 5 à 15 % en moles de résidus de l'acide 1,4-cyclohexanedicarboxylique, et de résidus de diols consistant en des résidus de 1,6-hexanediol, et dans laquelle le polyester amorphe a une température de transition vitreuse de 50 à 65, un indice d'hydroxyle de 35 à 120, un indice d'acide inférieur à 10 et une viscosité inhérente de 0,1 à 0,25 et est essentiellement constitué de résidus de l'acide téréphtalique, de résidus du 2,2-diméthyl-1,3-propanediol et de jusqu'à 10 % en moles, par rapport au nombre total de moles de triméthylolpropane et de 2,2-diméthyl-1,3-propanediol, de résidus de triméthylolpropane.

10. Article façonné métallique revêtu avec le produit de réaction d'une composition comprenant:
(1) 50 à 90 % en masse, par rapport à la masse de (1) et (2), d'un constituant polyester hydroxylé composé de
(A) 50 à 90 % en masse, par rapport à la masse du constituant polyester hydroxylé, d'un polyester semi-cristallin ayant une température de transition vitreuse inférieure à 50°C, un indice d'hydroxyle de 20 à 100, une viscosité inhérente de 0,1 à 0,5, un intervalle de fusion de 70 à 150°C, une masse moléculaire moyenne en nombre de 1500 à 10 000, et une chaleur de fusion (second cycle de chauffage de DSC (calorimétrie différentielle)) supérieure à 5 cal/g-°C, par exemple de 5 à 20 cal/g-°C; et
(B) 10 à 50 % en masse, par rapport à la masse du constituant polyester hydroxylé, d'un polyester amorphe ayant une température de transition vitreuse supérieure à 40°C, un indice d'hydroxyle de 20 à 120 et une viscosité inhérente de 0,1 à 0,5;
(2) 10 à 50 % en masse, par rapport à la masse de (1) et (2), d'un polymère acrylique hydroxylé ayant une température de transition vitreuse (Tv) supérieure à 40°C et un indice d'hydroxyle de 20 à 100; et
(3) une quantité efficace pour la réticulation d'un composé de type polyisocyanate bloqué;
ledit article revêtu présentant un indice de brillance à 60° selon la norme ASTM D-523-85 inférieur ou égal à 35, des valeurs de résistance aux chocs frontaux/arrière ASTM D2794-84 d'au moins 40/20 pouces-livres, un taux de réussite à l'essai d'adhérence au quadrillage au peigne ASTM D-3359-83 d'au moins 90, une dureté de crayon d'au moins H et une flexibilité ASTM-4145-83 d'au moins 2T.

11. Article selon la revendication 10, revêtu avec le produit de réaction d'une composition comprenant:
(1) 50 à 90 % en masse, par rapport à la masse de (1) et (2), d'un constituant polyester hydroxylé composé de
(A) 50 à 90 % en masse, par rapport à la masse du constituant polyester hydroxylé, d'un polyester semi-cristallin ayant une température de transition vitreuse inférieure à 30°C, un point de fusion de 90 à 140°C, un indice d'hydroxyle de 30 à 80, une viscosité inhérente de 0,1 à 0,5, une masse moléculaire moyenne en nombre de 2000 à 6000, et une chaleur de fusion (second cycle de chauffage de calorimétrie différentielle) supérieure à 8 cal/g-°C;
(B) 10 à 50 % en masse, par rapport à la masse du constituant polyester hydroxylé, d'un polyester amorphe ayant une température de transition vitreuse supérieure à 40°C, un indice d'hydroxyle de 20 à 120 et une viscosité inhérente de 0,1 à 0,5, constitué
(i) de résidus de diacides dont aux moins 50 % en moles sont des résidus de l'acide téréphtalique;
(ii) de résidus de glycols dont au moins 50 % en moles dérivent du 2,2-diméthyl-1,3-propanediol;
(iii) de jusqu'à 10 % en moles, par rapport au nombre total de moles de (i), (ii) et (iii), de résidus de triméthylolpropane;
(2) 10 à 50 % en masse, par rapport à la masse de (1) et (2), d'un polymère acrylique hydroxylé ayant une température de transition vitreuse supérieure à 40°C et un indice d'hydroxyle de 20 à 100; et
(3) 5 à 30 % en masse, par rapport à la masse totale de (1), (2) et (3), d'un composé de type polyisocyanate bloqué.
